# EUROPEAN PATENT SPECIFICATION

(11) **EP 2 157 736 B1**
(45) Date of publication and mention of the grant of the patent: **18.04.2012**
(21) Application number: 08863220.3
(22) Date of filing: 24.11.2008
(51) Int. Cl.: H04L 12/56, H04L 12/28

(54) **A METHOD AND SERVER FOR DETERMINING THE DIRECT OPTICAL PATH AND A SYSTEM FOR ESTABLISHING THE DIRECT OPTICAL PATH**
VERFAHREN UND SERVER ZUR BESTIMMUNG DES DIREKTEN OPTISCHEN PFADES UND EIN SYSTEM ZUM AUFBAU DES DIREKTEN OPTISCHEN PFADES
PROCÉDÉ ET SERVEUR POUR DÉTERMINER LE TRAJET OPTIQUE DIRECT ET SYSTÈME POUR ÉTABLIR LE TRAJET OPTIQUE DIRECT

(30) Priority: 27.11.2007 CN 200710187372
(43) Date of publication of application: 24.02.2010
(73) Proprietor: Huawei Technologies Co., Ltd., Longgang District, Shenzhen Guangdong 518129 (CN)
(72) Inventor: ZHENG, Yuanming, Shenzhen Guangdong 518129 (CN); HE, Jianfei, Shenzhen Guangdong 518129 (CN); XIA, Hongmiao, Shenzhen Guangdong 518129 (CN); LIU, Qingzhi, Shenzhen Guangdong 518129 (CN); LI, Qiming, Shenzhen Guangdong 518129 (CN); XU, Huiying, Shenzhen Guangdong 518129 (CN)
(74) Representative: Körber, Martin Hans
(86) International application number: PCT/CN2008/073177
(87) International publication number: WO 2009/076826

(56) References cited:
- CN-A- 1 625 869
- CN-A- 1 688 133
- CN-A- 1 691 605
- JP-A- 2005 094 333
- US-A1- 2005 232 157
- DAHEB B ET AL: "Quality of service routing for service level agreement conformance in optical networks" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE LNKD- DOI:10.1109/GLOCOM.2005.1578021, vol. 4, 28 November 2005 (2005-11-28), pages 2024-2028, XP010879542 ISBN: 978-0-7803-9414-8

## Description

### FIELD OF THE TECHNOLOGY

The present invention relates to the communication field, and more particularly to a method and server for determining a direct-connected optical path and a system for establishing a direct-connected optical path.

### BACKGROUND

With the rapid development of broadband Internet, network scale is increasingly expanded, network structure becomes more and more complicated, network services are diverse, and network traffic increases at a high speed. Telecommunication operators need to timely and accurately analyze the traffic and flow direction of network and various services borne by the network by using a reliable and effective network traffic monitoring system, so as to exploit the potential of network resources, control cost of network interconnection, and provide a basis for network planning, optimization and adjustment, and service development.

In the process of implementing the present invention, the inventor found that the prior art at least has the following problems.

Traffic monitoring data obtained by the above network traffic monitoring system are mainly used by a network administrator as data for network analysis, according to which the network administrator makes a decision to optimize the network through bandwidth setting, load balancing, and quality of service (QoS) setting. The network optimization is actually a long-term network planning instead of dynamic adjustment of the network topology or optimization of the network according to the traffic conditions.

In another aspect, currently, in a network formed by routers and optical transmission equipment, technologies for optimizing the network through the cooperation between the routers and the optical transmission equipment are not mature. For example, in the router layer, a direct-connected optical path between two routers is generally obtained through static preconfiguration. That is, two routers are pre-selected as two endpoints of the direct-connected optical path, and then the direct-connected optical path is obtained through static configuration. Here, the direct-connected optical path refers to a path between the two routers in the optical transmission layer. It can be seen that, such a static configuration method can neither dynamically adjust the network topology nor optimize the network resources. For example, the traffic bandwidth between the two routers (also referred to as nodes) on the path may be too large or too small, and if no direct-connected optical path has been preconfigured between the two nodes, network congestion will occur when the traffic bandwidth between the two nodes is too large. That is to say, as the two endpoints for which the direct-connected optical path needs to be established cannot be dynamically determined, the network topology cannot be dynamically adjusted, so that the optical layer network resources cannot be effectively used, resulting in a heavy load on the nodes in the router layer.

It is known from the above description that, the current method for determining a direct-connected optical path can neither dynamically determine two endpoints for which the direct-connected optical path needs to be established, nor dynamically adjust the network topology.

US 2005232157 A1 discloses a method for managing network traffic includes provisioning an internet protocol (IP) network for communicating traffic. The IP network comprises a plurality of nodes coupled by IP links.

DAHEB B ET AL: "Quality of service routing for service level agreement conformance in optical networks" GLOBAL TELECOMMUNICATIONS CONFERENCE, 2005. GLOBECOM '05. IEEE ST. LOIUS, MO, USA 28 NOV.-2 DEC. 2005, PISCATAWAY , NJ, USA, IEEE LNKD-DOI:10.1109/GLOCOM.2005.1578021, vol. 4, 28 November 2005 (2005-11-28), pages 2024-2028, XP010879542 ISBN:978-0-7803-9414-8 discloses a framework for managing quality of service in future WDM core optical networks, these networks solve the bandwidth problem but transmit complexity to the control and management layers.

### SUMMARY

Accordingly, the present invention provides a method and server for determining a direct-connected optical path, so as to dynamically determine two endpoints for which the direct-connected optical path needs to be established.

The present invention also provides a system for establishing a direct-connected optical path, so as to dynamically adjust a network topology.

In order to achieve the above objectives, the technical solutions of the present invention are as follows:

A method for determining a direct-connected optical path is provided. The method is as follows:
obtaining candidate node pairs according to a monitored bandwidth occupied by each of paths and monitored router nodes that each of the paths passes through, wherein a bandwidth between each candidate node pair exceeds a preset bandwidth threshold; and
selecting a node pair from the candidate node pairs as two endpoints of the direct-connected optical path according to a preset routing policy;
wherein the obtaining the candidate node pairs comprises:
computing a bandwidth between any two nodes of each of the paths, wherein the bandwidth between the two nodes is equal to a sum of bandwidths of all paths that pass through the two nodes; and using the two nodes as a candidate node pair when the bandwidth between the two nodes exceeds the bandwidth threshold; or
finding paths having at least two common nodes from the paths, summing up bandwidths of the found paths to obtain a bandwidth between the common nodes, and using any two nodes of the common nodes as a candidate node pair when the bandwidth between the common nodes exceeds the bandwidth threshold.

A server for determining a direct-connected optical path is provided. The method includes a candidate node pair obtaining module and an endpoint determining module:

The candidate node pair obtaining module is adapted to obtain candidate node pairs according to a monitored bandwidth occupied by each of paths and monitored router nodes that each of the paths passes through, in which a bandwidth between each candidate node pair exceeds a preset bandwidth threshold;

The endpoint determining module is adapted to select a node pair from the candidate node pairs obtained by the candidate node pair obtaining module as two endpoints of the direct-connected optical path according to a preset routing policy.
wherein the candidate node pair obtaining module (711) adapted to compute a bandwidth between any two nodes of each of the paths, wherein the bandwidth between the two nodes is equal to a sum of bandwidths of all paths that pass through the two nodes, use the two nodes as a candidate node pair when the bandwidth between the two nodes exceeds the bandwidth threshold; or
the candidate node pair obtaining module (711) adapted to find paths having at least two common nodes from the paths, sum up bandwidths of the found paths to obtain a bandwidth between the common nodes, use any two nodes of the common nodes as a candidate node pair when the bandwidth between the common nodes exceeds the bandwidth threshold.

A system for establishing a direct-connected optical path is provided. The system includes at least two nodes, and further includes the above server, a path computation element-high (PCE-Hi), and a path computation element-low (PCE-Lo).

The server adapted to instruct a path computation element-high to assign Internet protocol (IP) addresses to the two endpoints of the direct-connected optical path, and instruct the two endpoints to perform a direct route announcement according to the assigned IP addresses

The PCE-Hi is adapted to assign the IP addresses to the two endpoints determined by the server, and trigger a first node of a path where the direct-connected optical path is located to modify a record of nodes that the path passes through according to the direct route announcement of the two endpoints. The PCE-Lo is adapted to compute an optical layer path between the two endpoints determined by the server.

Compared with the prior art, with the method and server for determining a direct-connected optical path and the system for establishing a direct-connected optical path of the present invention, candidate node pairs having a bandwidth exceeding a preset bandwidth threshold are obtained according to a monitored bandwidth occupied by each of the paths and monitored router nodes that each of the paths passes through, a node pair is selected from the candidate node pairs, and a direct-connected optical path in the optical layer is established between the two nodes, so that the two endpoints for which the direct-connected optical path needs to be established can be dynamically determined according to the traffic bandwidth, thus dynamically adjusting the network topology. Therefore, the optical layer network resources can be effectively used, the load between the routers can be reduced, thus achieving the optimization of the network resources.

### BRIEF DESCRIPTION OF THE DRAWINGS

Figure 1 is a schematic flow chart of a method for determining a direct-connected optical path according to an embodiment of the present invention;
Figure 2 is a schematic view illustrating a process for determining a direct-connected optical path between two routers according to a first embodiment of the present invention;
Figure 3 is a schematic flow chart of a method for determining a direct-connected optical path according to the first embodiment of the present invention;
Figure 4 is a schematic view illustrating a process for determining a direct-connected optical path between two routers according to a second embodiment of the present invention;
Figure 5 is a schematic view illustrating a process for determining a direct-connected optical path between two routers according to a third embodiment of the present invention;
Figure 6 is a schematic view illustrating a process for determining a direct-connected optical path between two routers according to a fourth embodiment of the present invention; and
Figure 7 is a schematic structural view of a system for establishing a direct-connected optical path according to an embodiment of the present invention.

### DETAILED DESCRIPTION

In order to the make the objectives, technical solutions, and advantages of the present invention more comprehensible, the present invention is described in detail below with reference to some exemplary embodiments and accompanying drawings.

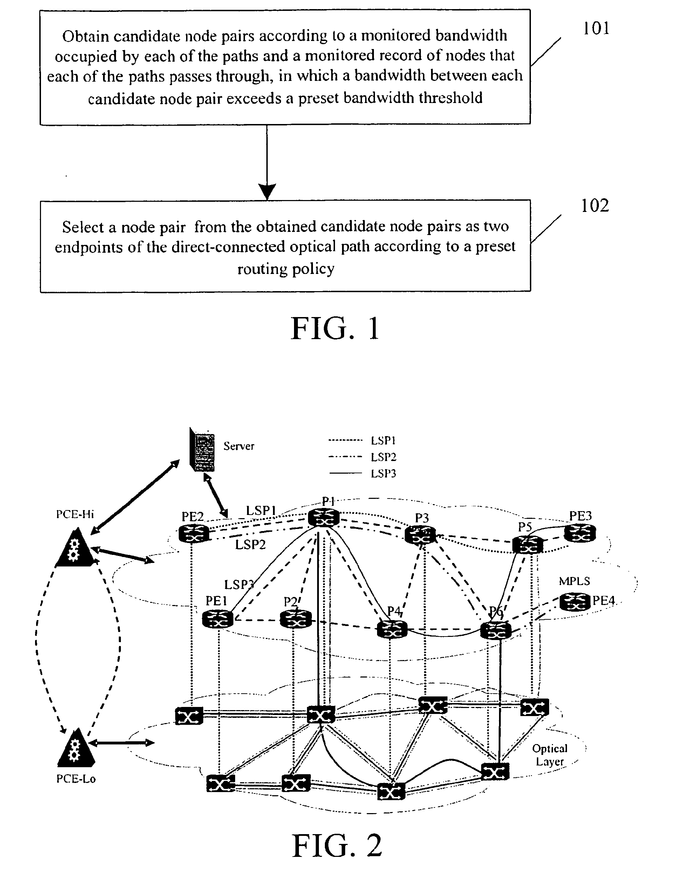

Figure 1 is a schematic flow chart of a method for determining a direct-connected optical path according to an embodiment of the present invention. Referring to Figure 1, the method includes the following steps.

Step 101: At least one candidate node pair is obtained according to a monitored bandwidth occupied by each of the paths and a monitored record of nodes that each of the paths passes through. A bandwidth between each candidate node pair exceeds a preset bandwidth threshold.

In this step, a method for monitoring the bandwidth occupied by each of the paths includes: collecting a statistics of traffic of the path in a predetermined time, and dividing the traffic of the path by the predetermined time to obtain a bandwidth of the path in the predetermined time.

The candidate node pairs may obtained by computing a bandwidth between any two nodes, in which the bandwidth between the two nodes is equal to a sum of bandwidths of all paths that pass through the two nodes, and using the two nodes as a candidate node pair when the bandwidth between the two nodes exceeds (i.e., larger than) the bandwidth threshold.

The candidate node pairs may also be obtained by finding paths having at least two common nodes from the paths, summing up bandwidths of the found paths to obtain a bandwidth between the common nodes, and using any two nodes of the common nodes as a candidate node pair when the bandwidth between the common nodes exceeds the bandwidth threshold. Here, a common node refers to a node that at least two paths pass through.

Step 102: A node pair is selected from the obtained candidate node pairs as two endpoints of the direct-connected optical path according to a preset routing policy.

In this step, many routing policies may be adopted. For example, if the routing policy is to determine the two endpoints of the direct-connected optical path when a route of the direct-connected optical path is the longest, this step includes: selecting a node pair with a longest distance between the two node thereof from the candidate node pairs as the two endpoints of the direct-connected optical path; while if the routing policy is to determine the two endpoints of the direct-connected optical path when the direct-connected optical path passes through the most paths, this step includes: selecting a node pair with the most paths between the two nodes thereof from the candidate node pairs as the two endpoints of the direct-connected optical path. Definitely, the two endpoints of the direct-connected optical path may also be selected through other routing policies.

Figure 2 is a schematic view illustrating a process for determining a direct-connected optical path between two routers according to a first embodiment of the present invention. Referring to Figure 2, a Multi-Protocol Label Switching-Traffic Engineering (MPLS-TE) layer includes three label switch paths (LSPs), respectively expressed as LSP1, LSP2, and LSP3. The dashed line represents LSP1, the dot-dash line represents LSP2, and the solid line represents LSP3. Each LSP not only contains edge nodes adapted to receive IP data, expressed as PE1, PE2, PE3, and PE4, but also contains intermediate nodes adapted to transmit data in the MPLS layer, expressed as P1, P2, P3, P4, P5, and P6. Here, the nodes are router nodes.

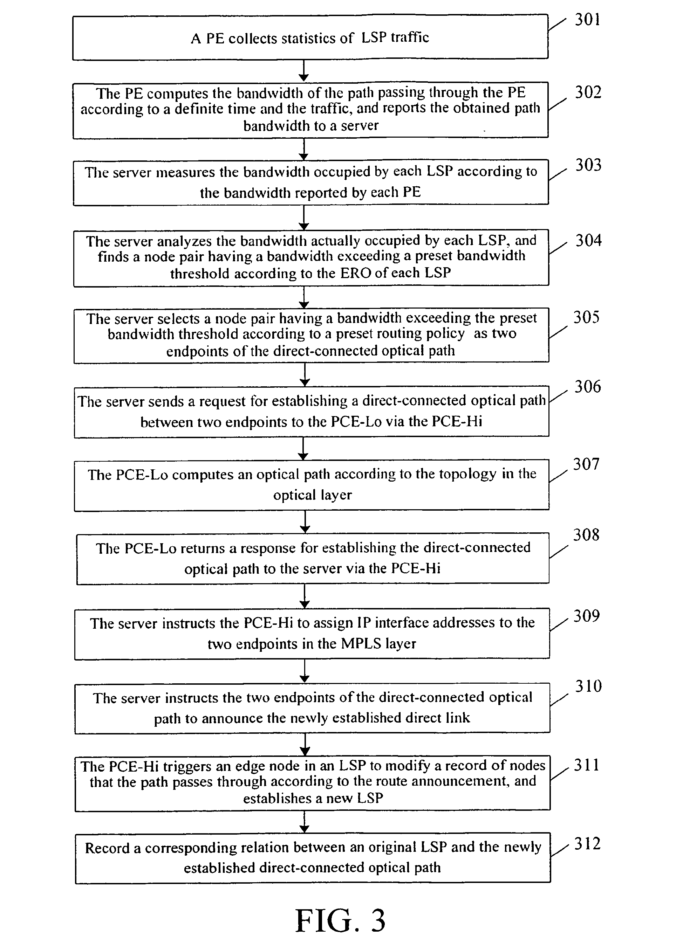

Each edge node monitors a bandwidth occupied by an LSP passing there-through and reports the bandwidth to a server. The sever is adapted to obtain two nodes of the path that have a bandwidth there-between exceeding a preset bandwidth threshold according to the monitored bandwidth occupied by the path and the preset bandwidth threshold, and request a path computation element (PCE) for establishing a direct-connected optical path in the optical layer after obtaining the two nodes having a bandwidth there-between exceeding the preset bandwidth threshold. In this embodiment, the PCE is divided into two layers, namely, path computation element-high (PCE-Hi) and path computation element-low (PCE-Lo). The PCE-Hi is responsible for path computation in the MPLS layer, and the PCE-Lo is responsible for path computation in the optical layer. In this embodiment, it is assumed that the server, the PCE-Hi, and the PCE-Lo are separate. With reference to Figure 2, a schematic flow chart of the method for determining a direct-connected optical path in this embodiment is described below. Referring to Figure 3, the method includes the following steps.

Step 301: A PE collects statistics of LSP traffic.

In this embodiment, the PE is adapted to receive data packets from the IP layer and map the data packets to corresponding LSPs for MPLS forwarding. In addition, the statistics of traffic of a path is collected in a definite time. The specific method is as follows: a timer is disposed on each PE, byte numbers of the data packets are accumulated in a definite time as the traffic of the path, which will be recorded in a maintained LSP traffic statistical table. For example, an LSP traffic statistical table as shown in Table 1 is maintained on PE2.

**Table 1**

| LSP | Out Interface | Out Label | ERO | Traffic (byte) |
|---|---|---|---|---|
| LSP 1:PE2->PE3 | 1 | 5 | PE2,P1,P3,P5,PE3 | 4500 M |
| LSP2:PE2->PE4 | 2 | 6 | PE2,P1,P3,P6,PE4 | 2250 M |

The table contains entries LSP, Out Interface, Out Label, ERO (Explicit Route Object), and Traffic.

The definite time used in this embodiment may be set according to a user policy. After the definite time, Step 302 is performed.

Step 302: The PE computes the bandwidth of the path passing through the PE according to the definite time and the traffic, and reports the obtained path bandwidth to the server.

In this embodiment, according to a method for computing the bandwidth, the bandwidth occupied by the path in the definite time is obtained by dividing the traffic of the path by the definite time, in a unit of bit/s. For example, if the definite time interval is 1 min, and the traffic in the definite time is 4500 Mbytes, the bandwidth is (4500*8)/60=600 Mbit/s.

After obtaining the bandwidth actually occupied by each LSP, the PE reports the obtained bandwidth to the server, and resets the entry Traffic in the local table to zero.

Step 303: The server measures the bandwidth occupied by each LSP according to the bandwidth reported by the PE.

In this embodiment, the server measures the bandwidths occupied by all LSPs. For example, an LSP bandwidth statistical table as shown by Table 2 maintained by the server includes two historical data entries, which show bandwidth data corresponding to all LSPs in a historical time. The two historical data entries in Table 2 respectively show the bandwidth in a last minute and the average bandwidth in a last hour. In this embodiment, the historical time is a cycle for monitoring the bandwidths occupied by the LSPs. According to statistical values in a previous monitoring cycle, the server determines whether a direct-connected optical path needs to be established. In this embodiment, the length of the historical time may be set according to a user policy.

**Table 2**

| LSP | Out Interface | Out Label | ERO | Bandwidth in a last minute (bit/s) | Bandwidth in a last hour (bit/s) |
|---|---|---|---|---|---|
| LSP1:PE2->PE3 | 1 | 5 | PE2,P1,P3,P5,PE3 | 600 M | 300 M |
| LSP2:PE2->PE4 | 2 | 6 | PE2,P1,P3,P6,PE4 | 300 M | 600 M |
| LSP3:PE1->PE3 | 1 | 4 | PE1,P1,P4,P6,P5,PE3 | 600 M | 500 M |

Step 304: The server analyzes the bandwidth actually occupied by each LSP, and finds a node pair having a bandwidth exceeding a preset bandwidth threshold according to the ERO of each LSP.

In this embodiment, nodes having a bandwidth exceeding the preset bandwidth threshold may be found based on node pairs. That is, firstly, all LSPs between two nodes are found according to the bandwidth of each of the paths and the ERO of each of the paths, and the bandwidth between the two nodes is equal to a sum of bandwidths of all paths that pass through the two nodes. For example, the bandwidth between PE2 and P1 in Table 2 is equal to a sum of bandwidths of LSP 1 and LSP2. Afterward, the bandwidth between the two nodes is compared with the preset bandwidth threshold.

Definitely, nodes having a bandwidth exceeding the preset bandwidth threshold may also be found based on paths. That is, firstly, paths having at least two common nodes are selected, and bandwidths of the selected paths are summed up to obtain a bandwidth between the common nodes. For example, LSP1, LSP2, and LSP3 in Table 2 only have one common node, so the bandwidths of the LSPs are not added. However, LSP1 and LSP3 have three common nodes, namely P1, P5, and PE3, so that the bandwidth between any two of the three common nodes is equal to a sum of bandwidths of LSP1 and LSP3. That is, the bandwidth passing through P1, P5, and PE3 is (300 M+500 M)bit/s in the last hour, and is (600 M+600 M)bit/s in the last minute. If the preset bandwidth threshold is 1000 Mbit/s, the bandwidths between P 1->P5, P5->PE3, and P1->PE3 all exceed the preset bandwidth threshold. Likewise, for LSP2 and LSP3, the bandwidths between P1->P6 all exceed the preset bandwidth threshold in the last hour.

Step 305: The server selects a node pair with a bandwidth exceeding the preset bandwidth threshold according to a preset routing policy as two endpoints of the direct-connected optical path.

In this embodiment, if the routing policy is to select two nodes with a longest distance between the two node thereof as the two endpoints of the direct-connected optical path, after analyzing that the bandwidth passing through P1, P5, and PE3 exceeds the preset bandwidth threshold in the last minute, the server will select two nodes with a longest distance between the two node thereof, i.e., P1 and PE3, as the two endpoints of the direct-connected optical path. Definitely, other routing policies may also be adopted, for example, preferentially selecting nodes at important positions as the endpoints. Thus, the server determines the two endpoints of the direct-connected optical path.

Step 306: The server sends a request for establishing a direct-connected optical path between the two endpoints to the PCE-Lo via the PCE-Hi.

In this embodiment, it is assumed that the server may also determine the number of direct-connected optical paths that need to be established according to a bandwidth between the two endpoints and a bandwidth of a preset optical path. For example, if a sum of bandwidths of LSPs between the two endpoints is 10 Gbit/s, and the preset optical path is 2.5 Gbit/s, four optical paths need to be established between the two endpoints.

Step 307: The PCE-Lo computes the optical layer paths according to the topology in the optical layer.

In this embodiment, the PCE-Lo may compute the optical layer paths according to the topology in the optical layer, and may also compute the optical layer paths according to the topology in the optical layer by taking the wavelength loss into consideration in order to obtain optimal optical layer paths. After computing the optical layer paths, the PCE-Lo triggers optical-layer nodes to establish the direct-connected optical path.

Step 308: The PCE-Lo returns a response for establishing the direct-connected optical path to the server via the PCE-Hi.

In this embodiment, if the PCE-Lo fails to obtain a suitable optical path after computing the optical layer paths, the PCE-Lo returns an establishment failure response, and the process is ended. If the PCE-Lo obtains the optimal optical paths and establishes the direct-connected optical path, the PCE-Lo returns an establishment success response, and the server initiates a path re-optimization and service handover process after knowing that the direct-connected optical path is established in the optical layer, and Step 309 is performed.

Step 309: The server instructs the PCE-Hi to assign IP interface addresses to the two endpoints in the MPLS layer.

In this embodiment, in order to establish the direct-connected optical path between the two endpoints, IP interface addresses need to be assigned to the two endpoints in the MPLS layer, and a dedicated address pool for direct links needs to be maintained at the PCE-Hi. For example, the address pool belongs to the same network segment. When the IP interface addresses need to be assigned to the two endpoints of the direct-connected optical path, the two endpoints of the direct-connected optical path perform address negotiation according to the address pool, and two addresses are selected from the address pool.

Step 310: The server instructs the two endpoints of the direct-connected optical path to announce the newly established direct link to all routers in the MPLS layer.

After the direct-connected optical path in the optical layer is successfully established, a route announcement needs to be performed in the MPLS layer. In this embodiment, an Open Shortest Path First (OSPF) protocol is run between the two endpoints of the direct-connected optical path to announce the newly established direct link, so that all nodes in the MPLS layer can know the newly established direct link. In this embodiment, the announcement is performed by sending information carrying paths in the network topology, in which information about the newly established direct link is carried. Definitely, the route announcement may also be performed in other ways. As the PCE-Hi is in the MPLS layer, the PCE-Hi can receive the route announcement. After the PCE-Hi receives the route announcement, Step 311 is performed.

Step 311: The PCE-Hi triggers a first node of an LSP to modify a record of nodes that the path passes through according to the route announcement, and establishes a new LSP.

In this embodiment, the PCE-Hi triggers a first node of an LSP where the two endpoints are located (or referred to as a first node that the LSP passes through) to re-record nodes that the new LSP passes through according to the newly established direct link. In this embodiment, ERO in the path message is modified, and the ERO contains the two endpoints of the direct-connected optical path.

Each edge node ensures that data streams are smoothly transited to the new LSP according to a make-before-break principle. Taking data in Table 2 for example, when the bandwidth in the last minute is compared with the bandwidth threshold and an optical path is newly established between P1-PE3, nodes that LSP1 passes through are PE2, P1, and PE3, and nodes that LSP3 passes through are PE1, P1, and PE3; when the bandwidth in the last hour is compared with the bandwidth threshold, as a new optical path is established between P1-P6, nodes that LSP2 passes through are PE2, P1, P6, and PE4, and nodes that LSP3 passes through are PE 1, P1, P6, P5, and PE3. That is to say, each LSP data stream is transported via the newly established optical path.

Step 312: A corresponding relation between an original LSP and the newly established direct-connected optical path is recorded.

In this embodiment, the corresponding relation between the original LSP and the newly established direct-connected optical path is recorded in the PCE-Hi. For example, when monitoring that the traffic or bandwidth between the two endpoints of the direct-connected optical path decreases to a preset threshold, the PCE-Hi can drive the PCE-Lo again to release the direct-connected optical path. In this case, it needs to firstly enable the traffic to be smoothly transited to the original LSP, and then notify the PCE-Lo to delete the corresponding direct-connected optical path and recover the IP interface addresses that have been assigned.

In this embodiment, in terms of the routers, the adjacency relation between the routers is not established through command configuration in the prior art, but is dynamically modified, so that the direct-connected optical path in the optical layer can be effectively used to achieve the inter-router data transmission in a network formed by routers and optical transmission equipment.

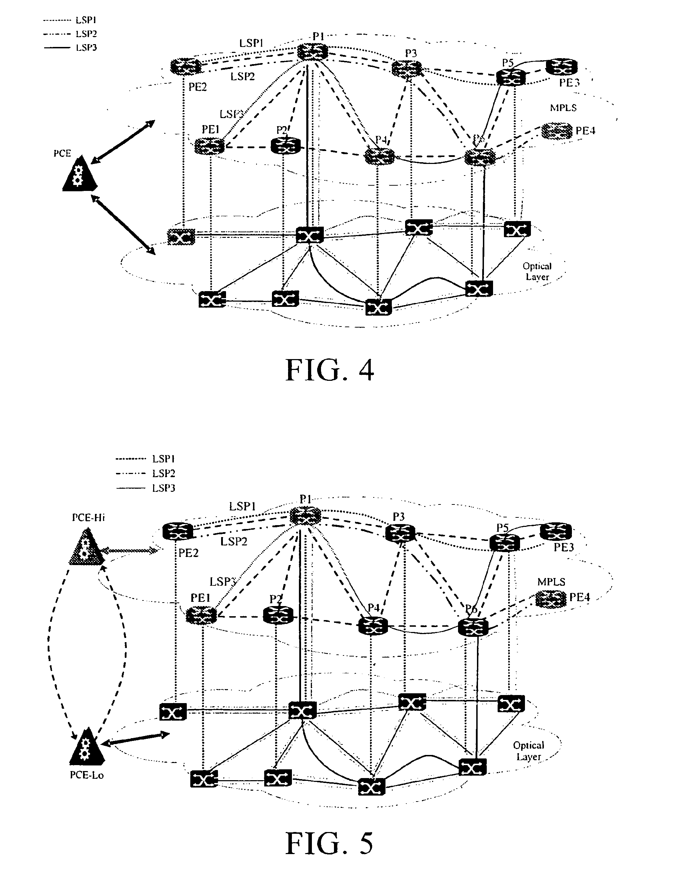

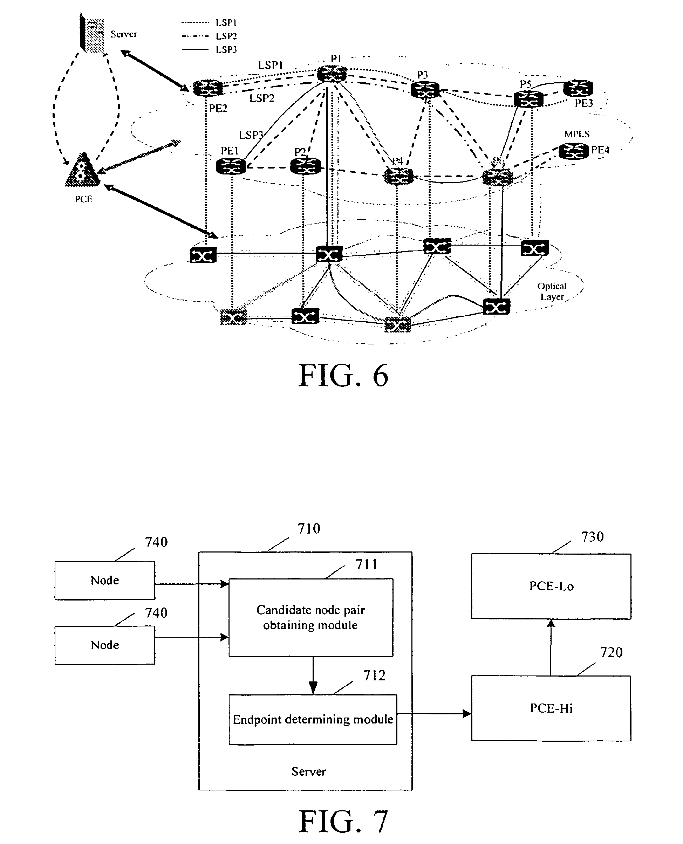

Definitely, in this embodiment, the server, the PCE-Hi, and the PCE-Lo may also be integrated in the PCE, as shown in Figure 4, so as to enable the PCE to possess the topology of the MPLS layer and the optical layer and compute paths in each layer. The server may also be integrated in the PCE-Hi as shown in Figure 5. Alternatively, the PCE-Hi and PCE-Lo may also be integrated as shown in Figure 6.

Figure 7 is a schematic structural view of a system for establishing a direct-connected optical path according to an embodiment of the present invention. Referring to Figure 7, the system includes at least two nodes 740, and further includes a server 710, a PCE-Hi 720. and a PCE-Lo 730.

The sever 710 is adapted to obtain candidate node pairs according to a monitored bandwidth occupied by each of the paths and a monitored record of nodes that each of the paths passes through, in which a bandwidth between each candidate node pair exceeds a preset bandwidth threshold, and select a node pair from the candidate node pairs as two endpoints of the direct-connected optical path according to a preset routing policy.

The PCE-Hi 720 is adapted to assign IP addresses to the two endpoints determined by the server.

The PCE-Lo 730 is adapted to compute an optical path between the two endpoints determined by the server.

The sever 710 includes a candidate node pair obtaining module 711 and an endpoint determining module 712.

The candidate node pair obtaining module 711 is adapted to obtain candidate node pairs according to a monitored bandwidth occupied by each of the paths and a monitored record of nodes that each of the paths passes through, in which a bandwidth between each candidate node pair exceeds a preset bandwidth threshold.

The endpoint determining module 712 is adapted to select two endpoints of the direct-connected optical path from the candidate node pairs obtained by the candidate node pair obtaining module according to a preset routing policy.

The server 710 and the PCE-Hi 720 are located in the same physical entity; or the PCE-Lo 730 and the PCE-Hi 720 are located in the same physical entity; or the server 710, the PCE-Hi 720, and the PCE-Lo 730 are located in the same physical entity.

The sever 710 may further include a path re-optimization initiating module for initiating a path re-optimization process, which is adapted to instruct a PCE to assign IP addresses to the two endpoints obtained by the endpoint determining module, and instruct the two endpoints obtained by the endpoint determining module to perform a direct route announcement according to the assigned IP addresses.

The sever 710 may further include a recording module and a releasing module. The recording module is adapted to record a corresponding relation between an original path and the direct-connected optical path. The releasing module is adapted to instruct the PCE to release the direct-connected optical path and restore the original path according to the corresponding relation in the recording module when a bandwidth between the two endpoints of the direct-connected optical path decreases to a preset release threshold.

Through the above description in the detailed description, it is clear to those skilled in the art that the present invention may be implemented through hardware, or through software plus necessary universal hardware platform. Based on this, the technical solutions of the present invention may be embodied in the form of a software product. The software product may be stored in a nonvolatile storage media (for example, CD-ROM, USB flash drive, or removable hard disk) and contain several instructions adapted to instruct a computer equipment (for example, a personal computer, a server, or a network equipment) to perform the method according to the embodiments of the present invention.

Finally, it should be understood that the above embodiments are only used to explain, but not to limit the technical solution of the present invention. In despite of the detailed description of the present invention with referring to above embodiments, it should be understood that various modifications, changes or equivalent replacements can be made by those skilled in the art without departing from the scope of the present invention and covered in the claims of the present invention.

## Claims

1. A method for determining and establishing a direct-connected optical path, the method comprising the steps of :
obtaining candidate node pairs according to a monitored bandwidth occupied by each of paths and monitored router nodes that each of the paths passes through, wherein a bandwidth between each candidate node pair exceeds a preset bandwidth threshold; and
selecting a node pair from the candidate node pairs as two endpoints of the direct-connected optical path according to a preset routing policy;
wherein the step of obtaining the candidate node pairs further comprises:
computing a bandwidth between any two nodes of each of the paths, wherein the bandwidth between the two nodes is equal to a sum of bandwidths of all paths that pass through the two nodes, and using the two nodes as a candidate node pair when the bandwidth between the two nodes exceeds the bandwidth threshold; or
finding paths having at least two common nodes from the paths, summing up bandwidths of the found paths to obtain a bandwidth between the common nodes, and using any two nodes of the common nodes as a candidate node pair when the bandwidth between the common nodes exceeds the bandwidth threshold.

2. The method according to claim 1, wherein after the two endpoints of the direct-connected optical path are determined, the method further comprises:
assigning Internet protocol, IP, addresses to the two endpoints of the direct-connected optical path;
performing, by the two endpoints, a direct route announcement according to the assigned IP addresses; and
triggering a first node of a path where the direct-connected optical path is located to modify a record of nodes that the path passes through according to the direct route announcement.

3. The method according to claim 2, wherein after triggering the first node of the path where the direct-connected optical path is located to modify the record of the nodes that the path passes through, the method further comprises:
recording a corresponding relation between an original path and the direct-connected optical path, and releasing the direct-connected optical path and restoring the original path according to the corresponding relation when a bandwidth between the two endpoints of the direct-connected optical path decreases to a preset release threshold.

4. The method according to claim 1, 2 or 3, wherein the monitoring the bandwidth occupied by each of the paths comprises:
collecting statistics of traffic of each of the paths in a predetermined time, and dividing the traffic of each of the paths by the predetermined time to obtain the bandwidth occupied by each of the paths in the predetermined time.

5. The method according to one of the claims 1 to 4, wherein a node pair with a longest distance between the two nodes thereof is selected from the candidate node pairs as the two endpoints of the direct-connected optical path, or a node pair with most paths between the two nodes thereof is selected from the candidate node pairs as the two endpoints of the direct-connected optical path.

6. A server (710) for determining and establishing a direct-connected optical path, the server comprising:
a candidate node pair obtaining module (711) adapted to obtain candidate node pairs according to a monitored bandwidth occupied by each of paths and monitored router nodes that each of the paths passes through, wherein a bandwidth between each candidate node pair exceeds a preset bandwidth threshold; and
an endpoint determining module (712) adapted to select a node pair from the candidate node pairs obtained by the candidate node pair obtaining module as two endpoints of the direct-connected optical path according to a preset routing policy;
wherein the candidate node pair obtaining module (711) is further adapted to compute a bandwidth between any two nodes of each of the paths, wherein the bandwidth between the two nodes is equal to a sum of bandwidths of all paths that pass through the two nodes, use the two nodes as a candidate node pair when the bandwidth between the two nodes exceeds the bandwidth threshold; or
the candidate node pair obtaining module (711) is further adapted to find paths having at least two common nodes from the paths, sum up bandwidths of the found paths to obtain a bandwidth between the common nodes, use any two nodes of the common nodes as a candidate node pair when the bandwidth between the common nodes exceeds the bandwidth threshold.

7. The server according to claim 6, further comprising:
a path re-optimization initiating module, adapted to instruct a path computation element to assign Internet protocol, IP, addresses to the two endpoints obtained by the endpoint determining module, and instruct the two endpoints obtained by the endpoint determining module to perform a direct route announcement according to the assigned IP addresses.

8. The server according to claim 6 or 7, further comprising:
a recording module, adapted to record a corresponding relation between an original path and the direct-connected optical path; and
a releasing module, adapted to instruct the path computation element to release the direct-connected optical path and restore the original path according to the corresponding relation in the recording module when a bandwidth between the two endpoints of the direct-connected optical path decreases to a preset release threshold.

9. A system for establishing a direct-connected optical path, wherein :
the system comprises at least two nodes, and further comprises the server according to any one of the claims 6 to 8;
the server is adapted to instruct a path computation element-high to assign Internet protocol, IP, addresses to the two endpoints of the direct-connected optical path, and instruct the two endpoints to perform a direct route announcement according to the assigned IP addresses
the path computation element-high (720) is adapted to assign the IP addresses to the two endpoints determined by the server, and trigger a first node of a path where the direct-connected optical path is located to modify a record of nodes that the path passes through according to the direct route announcement of the two endpoints; and
a path computation element-low (730) is adapted to compute an optical layer path between the two endpoints determined by the server.

10. The system according to claim 9, wherein the server (710) and the path computation element-high (720) are located in the same physical entity; or the path computation element-low (730) and the path computation element-high (720) are located in the same physical entity; or the server (710), the path computation element-high (720) and the path computation element-low (730) are located in the same physical entity.

## Patentansprüche

1. Verfahren zur Bestimmung und Herstellung eines direkt verbundenen optischen Pfades, wobei das Verfahren die folgenden Schritte umfasst:
Erhalten von Kandidatenknotenpaaren gemäß einer von jedem der Pfade belegten überwachten Bandbreite und überwachten Routerknoten, durch die jeder der Pfade verläuft, wobei eine Bandbreite zwischen jedem Kandidatenknotenpaar einen voreingestellten Bandbreitenschwellwert übersteigt; und
Wählen eines Knotenpaars aus den Kandidatenknotenpaaren als zwei Endpunkte des direkt verbundenen optischen Pfades gemäß einer voreingestellten Routing Policy;
wobei der Schritt des Erhaltens der Kandidatenknotenpaare weiterhin Folgendes umfasst:
Berechnen einer Bandbreite zwischen zwei beliebigen Knoten jedes der Pfade, wobei die Bandbreite zwischen den beiden Knoten gleich einer Summe von Bandbreiten von allen Pfaden ist, die durch die beiden Knoten verlaufen, und Verwenden der beiden Knoten als ein Kandidatenknotenpaar, wenn die Bandbreite zwischen den beiden Knoten den Bandbreitenschwellwert übersteigt; oder
Finden von Pfaden mit mindestens zwei gemeinsamen Knoten aus den Pfaden,
Aufsummieren von Bandbreiten der gefundenen Pfade, um eine Bandbreite zwischen den gemeinsamen Knoten zu erhalten, und Verwenden zweier beliebiger Knoten der gemeinsamen Knoten als ein Kandidatenknotenpaar, wenn die Bandbreite zwischen den gemeinsamen Knoten den Bandbreitenschwellwert übersteigt.

2. Verfahren nach Anspruch 1, wobei nach dem Bestimmen der beiden Endpunkte des direkt verbundenen optischen Pfades das Verfahren weiterhin Folgendes umfasst:
Zuweisen von Internetprotokoll-, IP-, Adressen zu den beiden Endpunkten des direkt verbundenen optischen Pfades;
Durchführen einer Direktroutenankündigung gemäß den zugewiesenen IP-Adressen durch die beiden Endpunkte und
Auslösen eines ersten Knotens eines Pfades, wo sich der direkt verbundene optische Pfad befindet, um eine Aufzeichnung von Knoten zu modifizieren, durch die der Pfad gemäß der Direktroutenankündigung verläuft.

3. Verfahren nach Anspruch 2, wobei nach dem Auslösen des ersten Knotens des Pfades, wo sich der direkt verbundene optische Pfad befindet, um die Aufzeichnung der Knoten zu modifizieren, durch die der Pfad hindurchläuft, das Verfahren weiterhin Folgendes umfasst:
Aufzeichnen einer entsprechenden Beziehung zwischen einem ursprünglichen Pfad und dem direkt verbundenen optischen Pfad und Freigeben des direkt verbundenen optischen Pfades und Wiederherstellen des ursprünglichen Pfades gemäß der entsprechenden Beziehung, wenn eine Bandbreite zwischen den beiden Endpunkten des direkt verbundenen optischen Pfades auf einen voreingestellten Freigabeschwellwert abnimmt.

4. Verfahren nach Anspruch 1, 2 oder 3, wobei das Überwachen der von jedem der Pfade belegten Bandbreite Folgendes umfasst:
Sammeln von Verkehrsstatistiken jedes der Pfade in einer vorbestimmten Zeit und Dividieren des Verkehrs jedes der Pfade durch die vorbestimmte Zeit, um die von jedem der Pfade in der vorbestimmten Zeit belegte Bandbreite zu erhalten.

5. Verfahren nach einem der Ansprüche 1 bis 4, wobei ein Knotenpaar mit einem längsten Abstand zwischen den beiden Knoten davon unter den Kandidatenknotenpaaren als die beiden Endpunkte des direkt verbundenen optischen Pfades gewählt wird oder ein Knotenpaar mit den meisten Pfaden zwischen den beiden Knoten davon unter den Kandidatenknotenpaaren als die beiden Endpunkte des direkt verbundenen optischen Pfades gewählt wird.

6. Server (710) zur Bestimmung und Herstellung eines direkt verbundenen optischen Pfades, wobei der Server Folgendes umfasst:
ein Kandidatenknotenpaarerhaltungsmodul (711), ausgelegt zum Erhalten von Kandidatenknotenpaaren gemäß einer von jedem der Pfade belegten überwachten Bandbreite und überwachten Routerknoten, durch die jeder der Pfade verläuft, wobei eine Bandbreite zwischen jedem Kandidatenknotenpaar einen voreingestellten Bandbreitenschwellwert übersteigt; und
ein Endpunktbestimmungsmodul (712), ausgelegt zum Auswählen eines Knotenpaars unter den von dem Kandidatenknotenpaarerhaltungsmodul erhaltenen Kandidatenknotenpaaren als zwei Endpunkte des direkt verbundenen optischen Pfades gemäß einer voreingestellten Routing Policy;
wobei das Kandidatenknotenpaarerhaltungsmodul (711) weiterhin ausgelegt ist zum Berechnen einer Bandbreite zwischen zwei beliebigen Knoten jedes der Pfade, wobei die Bandbreite zwischen den beiden Knoten gleich einer Summe von Bandbreiten von allen Pfaden ist, die durch die beiden Knoten verlaufen, Verwenden der beiden Knoten als ein Kandidatenknotenpaar, wenn die Bandbreite zwischen den beiden Knoten den Bandbreitenschwellwert übersteigt; oder
das Kandidatenknotenpaarerhaltungsmodul (711) weiterhin ausgelegt ist zum Finden von Pfaden mit mindestens zwei gemeinsamen Knoten aus den Pfaden,
Aufsummieren von Bandbreiten der gefundenen Pfade, um eine Bandbreite zwischen den gemeinsamen Knoten zu erhalten, und Verwenden zweier beliebiger Knoten der gemeinsamen Knoten als ein Kandidatenknotenpaar, wenn die Bandbreite zwischen den gemeinsamen Knoten den Bandbreitenschwellwert übersteigt.

7. Server nach Anspruch 6, der weiterhin Folgendes umfasst:
ein Pfadreoptimierungsinitiierungsmodul, ausgelegt zum Anweisen eines Pfadberechnungselements, Internetprotokoll-, IP-, Adressen den beiden von dem Endpunktbestimmungsmodul erhaltenen Endpunkten zuzuweisen und die durch das Endpunktbestimmungsmodul erhaltenen beiden Endpunkte anzuweisen, eine Direktroutenankündigung gemäß den zugewiesenen IP-Adressen durchzuführen.

8. Server nach Anspruch 6 oder 7, der weiterhin Folgendes umfasst:
ein Aufzeichnungsmodul, ausgelegt zum Aufzeichnen einer entsprechenden Beziehung zwischen einem ursprünglichen Pfad und dem direkt verbundenen optischen Pfad; und
ein Freigabemodul, ausgelegt zum Anweisen des Pfadberechnungselements, den direkt verbundenen optischen Pfad freizugeben und den ursprünglichen Pfad gemäß der entsprechenden Beziehung in dem Aufzeichnungsmodul wiederherzustellen,
wenn eine Bandbreite zwischen den beiden Endpunkten des direkt verbundenen optischen Pfades auf einen voreingestellten Freigabeschwellwert abnimmt.

9. System zur Herstellung eines direkt verbundenen optischen Pfades, wobei:
das System mindestens zwei Knoten umfasst und weiterhin den Server nach einem der Ansprüche 6 bis 8 umfasst;
wobei der Server ausgelegt ist zum Anweisen eines Pfadberechnungselement-Hochs, Internetprotokoll-, IP-, Adressen den beiden Endpunkten des direkt verbundenen optischen Pfades zuzuweisen, und Anweisen der beiden Endpunkte, eine Direktroutenankündigung gemäß den zugewiesenen IP-Adressen durchzuführen;
wobei das Pfadberechnungselement-Hoch (720) ausgelegt ist zum Zuweisen der IP-Adressen an die beiden von dem Server bestimmten Endpunkte und Auslösen eines ersten Knotens eines Pfades, wo sich der direkt verbundene optische Pfad befindet, um eine Aufzeichnung von Knoten zu modifizieren, durch die der Pfad verläuft, gemäß der Direktroutenankündigung der beiden Endpunkte; und
ein Pfadberechnungselement-Niedrig (730) ausgelegt ist zum Berechnen des Pfades einer optischen Schicht zwischen den von dem Server bestimmten beiden Endpunkten.

10. System nach Anspruch 9, wobei sich der Server (710) und das Pfadberechnungselement-Hoch (720) in der gleichen physischen Entität befinden; oder sich das Pfadberechnungselement-Niedrig (730) und das Pfadberechnungselement-Hoch (720) in der gleichen physischen Entität befinden; oder sich der Server (710), das Pfadberechnungselement-Hoch (720) und das Pfadberechnungselement-Niedrig (730) in der gleichen physischen Entität befinden.

## Revendications

1. Procédé permettant de déterminer et d'établir un trajet optique relié directement, le procédé comprenant les étapes suivantes :
la récupération de paires de noeuds candidates en fonction d'une bande passante surveillée occupée par chacun des trajets et des noeuds de routeurs surveillés au travers desquels passe chacun des trajets, la bande passante entre chaque paire de noeuds candidate dépassant un seuil de bande passante préréglé, et
la sélection d'une paire de noeuds à partir des paires de noeuds candidates comme représentant deux points terminaux du trajet optique relié directement en fonction d'une politique de routage préréglée,
dans lequel l'étape de récupération des paires de noeuds candidates comprend en outre :
le calcul d'une largeur de bande entre deux noeuds quelconques de chacun des trajets, la bande passante entre les deux noeuds étant égale à la somme des bandes passantes de tous les trajets qui traversent les deux noeuds, ainsi que l'utilisation des deux noeuds comme paire de noeuds candidate lorsque la bande passante entre les deux noeuds dépasse le seuil de bande passante, ou
la découverte de trajets comportant au moins deux noeuds communs à partir des trajets, la sommation des largeurs de bande des trajets trouvés afin d'obtenir une bande passante entre les noeuds communs, ainsi que l'utilisation de deux noeuds quelconques parmi les noeuds communs comme paire de noeuds candidate lorsque la bande passante entre les noeuds communs dépasse le seuil de bande passante.

2. Procédé selon la revendication 1, dans lequel, après que les deux points terminaux du trajet optique relié directement ont été déterminés, le procédé comprend en outre :
l'assignation d'adresses au protocole Internet, IP, aux deux points terminaux du trajet optique relié directement,
l'exécution, par les deux points terminaux, d'une annonce de route directe en fonction des adresses assignées au protocole IP, et
le déclenchement d'un premier noeud d'un trajet où est situé le trajet optique relié directement afin de modifier un enregistrement de noeuds au travers desquels passe le trajet en fonction de l'annonce de route directe.

3. Procédé selon la revendication 2, dans lequel, après le déclenchement du premier noeud du trajet où est situé le trajet optique relié directement pour modifier l'enregistrement des noeuds au travers desquels passe le trajet, le procédé comprend en outre :
l'enregistrement d'une relation correspondante entre un trajet originel et le trajet optique relié directement, la libération du trajet optique relié directement, ainsi que la restauration du trajet originel en fonction de la relation correspondante lorsque la bande passante entre les deux points terminaux du trajet optique relié directement diminue jusqu'à un seuil de libération préréglé.

4. Procédé selon la revendication 1, 2 ou 3, dans lequel la surveillance de la bande passante occupée par chacun des trajets comprend :
le recueil de statistiques de trafic de chacun des trajets en un temps prédéterminé et la division du trafic de chacun des trajets par le temps prédéterminé dans le but d'obtenir la bande passante occupée par chacun des trajets dans le temps prédéterminé.

5. Procédé selon l'une des revendications 1 à 4, dans lequel la paire de noeuds présentant la distance la plus longue entre ses deux noeuds est sélectionnée à partir des paires de noeuds candidates comme représentant les deux points terminaux du trajet optique relié directement, ou bien une paire de noeuds présentant le plus de trajets entre ses deux noeuds est sélectionnée à partir des paires de noeuds candidates comme représentant les deux points terminaux du trajet optique relié directement.

6. Serveur (710) permettant de déterminer et d'établir un trajet optique relié directement, le serveur comprenant :
un module de récupération de paires de noeuds candidates (711) conçu pour récupérer des paires de noeuds candidates en fonction d'une bande passante surveillée occupée par chacun des trajets et des noeuds de routeurs surveillés au travers desquels passe chacun des trajets, la bande passante entre chaque paire de noeuds candidate dépassant un seuil de bande passante préréglé, et
un module de détermination de points terminaux (712) conçu pour sélectionner une paire de noeuds à partir des paires de noeuds candidates obtenues par le module de récupération de paires de noeuds candidates comme représentant deux points terminaux du trajet optique relié directement en fonction d'une politique de routage préréglée,
dans lequel le module de récupération de paires de noeuds candidates (711) est en outre conçu pour calculer une largeur de bande entre deux noeuds quelconques de chacun des trajets, la bande passante entre les deux noeuds étant égale à la somme des bandes passantes de la totalité des trajets qui traversent les deux noeuds, et pour utiliser les deux noeuds comme paire de noeuds candidate lorsque la bande passante entre les deux noeuds dépasse le seuil de bande passante, ou
le module de récupération de paires de noeuds candidates (711) est en outre conçu pour trouver des trajets présentant au moins deux noeuds communs à partir des trajets, pour ajouter les largeurs de bande des trajets trouvés afin d'obtenir une bande passante entre les noeuds communs, et pour utiliser deux noeuds quelconques parmi les noeuds communs comme paire de noeuds candidate lorsque la bande passante entre les noeuds communs dépasse le seuil de bande passante.

7. Serveur selon la revendication 6, comprenant en outre :
un module de déclenchement de nouvelle optimisation de trajet, conçu pour ordonner à un élément de calcul de trajet d'assigner des adresses au protocole Internet, IP, aux deux points terminaux obtenus par le module de détermination de points terminaux,
et pour ordonner aux deux points terminaux obtenus par le module de détermination de points terminaux d'exécuter une annonce de route directe en fonction des adresses assignées au protocole IP.

8. Serveur selon la revendication 6 ou 7, comprenant en outre :
un module d'enregistrement, conçu pour enregistrer une relation correspondante entre un trajet originel et le trajet optique relié directement, et
un module de libération, conçu pour ordonner à l'élément de calcul de trajet de libérer le trajet optique relié directement et pour restaurer le trajet originel en fonction de la relation correspondante dans le module d'enregistrement lorsque la bande passante entre les deux points terminaux du trajet optique relié directement diminue jusqu'à un seuil de libération préréglé.

9. Système permettant d'établir un trajet optique relié directement, dans lequel :
le système comprend au moins deux noeuds et comprend en outre le serveur conforme à l'une quelconque des revendications 6 à 8,
le serveur est en outre conçu pour ordonner à un élément de haut niveau de calcul de trajet d'assigner des adresses au protocole Internet, IP, aux deux points terminaux du trajet optique relié directement, ainsi que pour ordonner aux deux points terminaux d'exécuter une annonce de route directe en fonction des adresses assignées au protocole IP,
l'élément de haut niveau de calcul de trajet (720) est en outre conçu pour assigner les adresses au protocole IP aux deux points terminaux déterminés par le serveur, ainsi que pour déclencher un premier noeud d'un trajet où est situé le trajet optique relié directement afin de modifier un enregistrement de noeuds au travers desquels passe le trajet en fonction de l'annonce de route directe des deux points terminaux, et
un élément de bas niveau de calcul de trajet (730) est conçu pour calculer un trajet de couche optique entre les deux points terminaux déterminés par le serveur.

10. Système selon la revendication 9, dans lequel le serveur (710) et l'élément de haut niveau de calcul de trajet (720) sont situés dans la même entité physique, ou bien l'élément de bas niveau de calcul de trajet (730) et l'élément de haut niveau de calcul de trajet (720) sont situés dans la même entité physique, ou encore le serveur (710), l'élément de haut niveau de calcul de trajet (720) et l'élément de bas niveau de calcul de trajet (730) sont situés dans la même entité physique.
